(19) Europäisches Patentamt
European Patent Office
Office européen des brevets

(11) **EP 2 386 996 A1**

(12) **EUROPÄISCHE PATENTANMELDUNG**

(43) Veröffentlichungstag:
 **16.11.2011 Patentblatt 2011/46**

(51) Int Cl.:
 ***G06T 5/00*** *(2006.01)*

(21) Anmeldenummer: **11174162.5**

(22) Anmeldetag: **16.03.2006**

(84) Benannte Vertragsstaaten:
 **AT BE BG CH CY CZ DE DK EE ES FI FR GB GR HU IE IS IT LI LT LU LV MC NL PL PT RO SE SI SK TR**

(30) Priorität: **16.03.2005 DE 102005012094**

(62) Dokumentnummer(n) der früheren Anmeldung(en) nach Art. 76 EPÜ:
 **06723480.7 / 1 861 822**

(71) Anmelder: **Werth Messtechnik GmbH**
 **35394 Giessen (DE)**

(72) Erfinder: **STEINBEISS, Heinrich**
 **85055 Ingolstadt (DE)**

(74) Vertreter: **Stoffregen, Hans-Herbert**
 **Patentanwalt**
 **Friedrich-Ebert-Anlage 11b**
 **63450 Hanau (DE)**

Bemerkungen:
 Diese Anmeldung ist am 15.07.2011 als Teilanmeldung zu der unter INID-Code 62 erwähnten Anmeldung eingereicht worden.

(54) **Verfahren und Vorrichtung zur Konturfeinermittlung eines Objekts bei bildgebenden Untersuchungsverfahren**

(57) Die Erfindung bezieht sich auf ein Verfahren zur Konturfeinermittlung eines Objekts bei bildgebenden Untersuchungsverfahren, bei denen das Objekt in mehreren Projektionswinkeln abgetastet wird und aus den Abtastwerten eine dreidimensionale Darstellung des Objekts rekonstruiert wird. Für die Darstellung des Objekts werden Volumendaten gewonnen, für die Lagestimmung der Kontur der dreidimensionalen Objektdarstellung ein Schwellwert der Rekonstruktionswerte festgelegt und die Lage der Konturpunkte bestimmt. Es werden ein erster Schwellwert ($G_1$) der Rekonstruktionswerte festgelegt, für die Bestimmung der Lage eines Konturpunktes jeweils ein erster Konturpunkt ($K_1$) des Objekts festgelegt, eine sich von außen in das Objekt erstreckende und durch den ersten Konturpunkt verlaufende Profillinie festgelegt und Stützpunkte auf dieser vorgegeben. Entlang der Profillinie für die Stützpunkte werden die zugehörigen Rekonstruktionswerte bestimmt. Aus deren Verlauf der Abtastwerte entlang und/oder benachbart der Profillinie um den ersten Konturpunkt herum wird ein neuer lokaler Schwellwert ($G_1$) der Abtastwerte bestimmt und auf der Profillinie wird der erste Konturpunkt zu einem zweiten Konturpunkt ($K_1$) am Ort des lokalen Schwellwerts verschoben.

Fig. 4

EP 2 386 996 A1

**Beschreibung**

Die Erfindung betrifft ein Verfahren und eine Vorrichtung zur Konturfeinermittlung eines Objekts bei bildgebenden Untersuchungsverfahren, bei denen über eine Aufnahme von Projektionsbildern des Untersuchungsobjekts eine dreidimensionale Darstellung des Untersuchungsobjektes rekonstruiert wird. Für die Darstellung des Untersuchungsobjekts werden Volumendaten gewonnen, aus denen die Lage der Oberflächenkontur über einen Schwellwert festgelegt wird und die Lage der Konturpunkte bestimmt wird.

In der Medizin werden in zunehmendem Maße bildgebende Verfahren angewendet, aus denen medizinische Volumendaten gewonnen werden, beispielsweise Computertomographie (CT), Magnetresonanztomographie (MRT) und 3D-Ultraschall. Durch eine möglichst detailgetreue Wiedergabe der Aufnahmen können medizinische Sachverhalte aus den Volumendatensätzen zuverlässig festgestellt werden und anhand der Lage und Ausdehnung räumlicher Körperstrukturen (Frakturen, Knochendefekte, Gefäßsysteme, etc.) Diagnose, Therapie und chirurgische Eingriffe unterstützt werden.

Im industriellen Umfeld werden bildgebende Durchstrahlungsverfahren für die zerstörungsfreie Prüfung von Bauteilen eingesetzt. Industrielle Röntgen-Computertomographie-Anlagen dienen dazu, Materialfehler (z. B. Poren, Lunker, Risse) zu detektieren sowie komplexe Bauteilgeometrien (einschließlich Hinterschnitten, Hohlräumen) in einem Messvorgang zu erfassen. Der Einsatz der CT-Anlagen ermöglicht eine genaue und schnelle Bauteilanalyse. Dabei kann einerseits die Qualität der Bauteile, andererseits auch deren innere und äußere Geometrie erfasst werden.

Eine CT-Messung beispielsweise gliedert sich bei derartigen Verfahren in drei Hauptschritte: Zunächst werden aus mehreren Blickwinkeln Projektionsbilder des Objektes aufgenommen. Die Projektionsdaten werden vorverarbeitet und anschließend ein 3D-CT-Volumen rekonstruiert. Die kleinste Auflösungseinheit des CT-Volumens, das sogenannte Voxel, wird durch einen Grauwert (Rekonstruktionswert) repräsentiert. Das CT-Volumen ist Ausgangsdatensatz für weiterführende Schritte wie Visualisierung, Fehlstellenanalyse und dimensionelles Messen. Für die Bestimmung der geometrischen Abmaße muss aus dem CT-Volumen die Objektkontur extrahiert werden. Diese wird von einer Vielzahl von Stützpunkten repräsentiert. Werden bei der Extraktion zusätzlich zu den Konturpunkten auch Informationen über deren Vernetzung gewonnen, kann die Kontur als Schalenmodell exportiert werden. Dessen Teilflächen sind über .eine Auswärtsnormale orientiert. Bei der Berechnung der Kontur wird das CT-Volumen zunächst über einen vom Bediener vorgegebenen Schwellwert in den Objekt- und Hintergrundbereich segmentiert. Die Lage der Kontur wird anschliessend subvoxelgenau durch Interpolation berechnet.

Eine Vielfalt von Methoden ist für die Konturextraktion bekannt. Sehr verbreitet ist die Erzeugung von Isoflächen aus dem Volumendatensatz, deren Stützpunkte mit einem vorzugebenden Schwellwert berechnet werden. Es wird dabei angenommen, dass die Kontur eine konstante Grauwertintensität (Isograuwert) besitzt. So ist in der US 4 885 688 ein bei der Computertomographie (CT) angewendetes Verfahren der eingangs genannten Art beschrieben, bei dem eine 3D-Extraktionsmethode benutzt wird, um die 3D-Objektkontur aus dem CT-Volumen direkt zu gewinnen. Zugleich kann die korrekte Vernetzung der Punkte (z. B. zu Dreiecken) ermittelt werden.

Eine weit verbreitete Methode zur Konturextraktion ist die Marching-Cubes-Methode, die beispielsweise in der US 4 710 876 beschrieben ist. Ein aus acht benachbarten Voxeln zusammengesetzter virtueller Würfel wird darauf untersucht, ob zwischen zwei Voxelwerten einer Würfelkante die Konturgrenze verläuft oder nicht. Hierzu werden über einen vorgegebenen Schwellwert die Voxel in einen Objekt- und Umgebungsbereich segmentiert. Werden zwei benachbarte Voxel als Objekt- und Umgebungsbereich klassifziert, wird die exakte Lage der Kontur über eine Interpolation bestimmt.

Bei derartigen 3D-Isoflächenextraktionsalgorithmen kommt es aufgrund von Fehlern im CT-Volumen und bei einem ungenügend angepassten Schwellwert zur ungenauen Berechnung der Konturgrenze. Der Iso-Extraktionsprozess führt so zu einer deutlich verschlechterten Messgenauigkeit. Im Folgenden werden die Ursachen der Fehler bei der 3D-Isokonturextraktion näher erläutert.

Die Rekonstruktion eines CT-Volumens geht von idealen Projektionsdaten, d.h. monochromatischer Röntgenstrahlung und alleiniger Abhängigkeit der Schwächungswerte von der Materialverteilung aus. Da diese Voraussetzungen in der Praxis nicht gegeben sind, treten bei der CT-Messung Fehler (Artefakte) auf, die nicht oder nur teilweise unter erheblichem zeitlichen und rechnerischen Aufwand korrigiert werden können. Die Fehlerquellen führen zu "falschen" Rekonstruktionswerten (Grauwerten), die von den korrekten Werten abweichen. Wesentliche Fehlerquellen bei der CT-Messung sind:

- poly- statt monoenergetische Röntgenstrahlung (-> Strahlaufhärtungsartefakt)

- Veränderung der Röntgenenergieverteilung während der Messung

- unterschiedliche Sensitivität der Detektorpixel

- Kantenverschmierung im Röntgenkonverter des Detektors.

Aufgrund von verschiedenen Fehlerursachen bei der Objektabbildung und -rekonstruktion kann es dabei im CT-Volumen im Übergangsbereich von Objekt zur Umgebung zu Kantenverschmierungen über mehrere Voxel (etwa drei bis sieben Voxel) kommen.

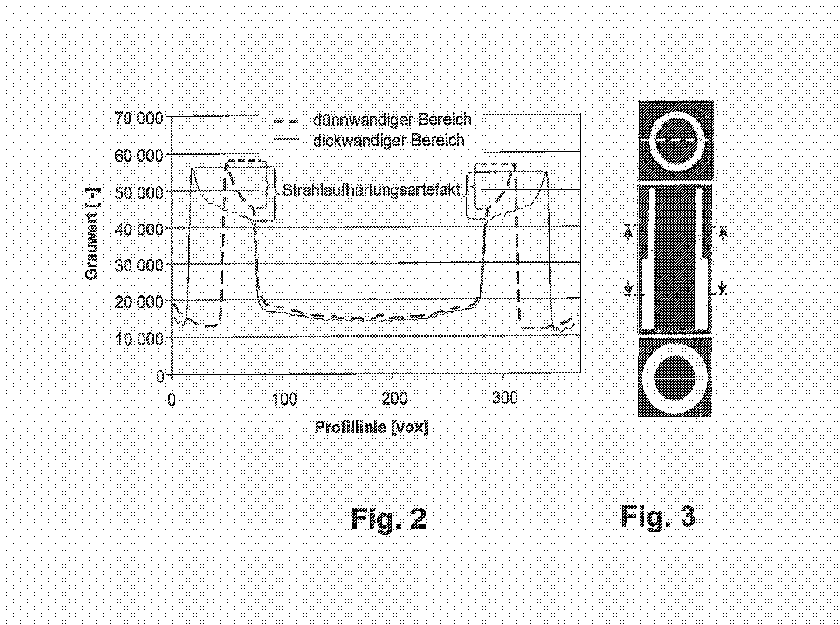

Beispielhaft wird das sogenannte Strahlaufhärtungsartefakt näher anhand von Fig. 2 und 3 erläutert. Fig. 2 und 3 zeigen Schnittbilder und Grauwert-Profillinien durch das CT-Volumen eines Hohlzylinders. Aufgrund des Artefakts werden an der Außenkontur für das Objekt höhere Grauwerte rekonstruiert als an der Innenkontur. Das Strahlaufhärtungsartefakt wird mit zunehmender Wandstärke grösser. Es ist auf die polychromatische Energieverteilung des Strahlenspektrums zurückzuführen, welches von den Röntgenröhren emittiert wird. Die Absorption der Röntgenstrahlung im Untersuchungsobjekt, die u.a. von der Ordnungszahl des Objektmaterials abhängig ist, führt zu einer Verschiebung der mittleren Strahlungsenergie zu höheren Werten. Infolgedessen werden beim Strahlaufhärtungsartefakt für ein Material verschiedene Grauwerte abhängig von der Strahlungsabschwächung rekonstruiert. Weist das Untersuchungsobjekt Materialinhomogenitäten auf oder besteht es aus verschiedenen Materialien, so werden im Objektbereich lokal unterschiedliche Grauwerte rekonstruiert. Bei der Konturextraktion sind insbesondere Materialunterschiede an der Oberfläche von Bedeutung, wie z. B. Seigerungen und Beschichtungen.

Die Lage der Kontur ist abhängig vom gewählten Iso-Schwellwert. Wird der Iso-Schwellwert ungenau gewählt, so führt dies zu Abweichungen der extrahierten Kontur im Vergleich zur Objektkontur. Je grösser der Iso-Schwellwert ist, desto weiter wandert die extrahierte Objektgrenze in das Objektinnere. Der Bediener muss den Schwellwert z. B. über ein Grauwerthistogramm, die Analyse von CT-Schichtbildern oder Referenzkörper berechnen. Da in realen CT-Volumina die Grauwertniveaus von Objekt bzw. Hintergrund lokal verschieden sind, der Absolutwert der Grauwerte jedoch bei Iso-Extraktionsverfahren nicht berücksichtigt wird, kann der globale Iso-Schwellwert nur annähernd bestimmt werden.

Zur Lösung dieser Probleme sind verschiedene Wege beschritten worden. Um das Strahlaufhärtungsartefakt korrigieren zu können, wird gemäß einer Vorgehensweise vor der eigentlichen Messung zunächst die Röntgenstrahlschwächung für unterschiedliche Materialdicken z. B. an einem Stufenkeil bestimmt und eine Korrekturkennlinie aufgenommen. Diese wird verwendet, um bei der späteren Messung des Prüfobjekts eine Korrektur der Projektionsdaten zur Kompensation des Strahlaufhärtungsartefakts auszuführen. Weiter ist in der DE 102 02 732 A1 ein iteratives Verfahren zur Strahlaufhärtungskorrektur beschrieben, bei dem anhand des Untersuchungsobjekts eine Korrekturkennlinie iterativ ermittelt und somit das Strahlaufhärtungsartefakt korrigiert werden kann. Derartige Vorversuche an einem Probekörper oder rechenintensive iterative Korrekturen sind zeitaufwendig. Zudem kann eine solche Korrektur nur an Untersuchungsobjekten durchgeführt werden, die aus einem Material bestehen. Hinzu kommt, dass die bekannten Korrekturverfahren in der Regel nur ein oder zwei verschiedene Artefakte kompensieren können.

Aus den Literaturstellen

D1: MCCARTHY S ET AL: "Segmentation algorithm for objects with very low edge contrast" PROCEEDINGS OF THE SPIE - THE INTERNATIONAL SOCIETY FOR OPTICAL ENGINEERING SPIE-INT. SOC. OPT. ENG USA, Bd: 5608, Nr. 1, 2004, Seiten 162-168, XP002404854 ISSN: 0277-786X, und

D2: ISAAC N BANKMAN ET AL: "Segmentation Algorithms for Detecting Microcalcifications in Mammograms" IEE TRANSACTIONS ON INFORMATION TECHNOLOGY IN BIOMEDICINE, IEEE SEVICE CENTER, LOS ALAMATOS, CA, US, Bd. 1, Nr. 2, Juni 1997 (1997-06), XP011028275 ISSN: 1089-7771,

sind Mammografie-Verfahren zur Konturermittlung eines Gewebebereichs zu entnehmen, bei denen ausgehend von einem Punkt größter Helligkeit Profillinien strahlenförmig ausgehen, um unter Berücksichtigung der diesen zugeordneten Rekonstruktionswerten die Kontur eines Gewebebereichs zu bestimmen.

Der Erfindung liegt die Aufgabe zugrunde, ein Verfahren und eine Vorrichtung zur Konturermittlung eines Objekts zu schaffen, die eine hohe Genauigkeit der Konturermittlung ermöglichen.

Diese Aufgabe ist erfindungsgemäß bei einem Verfahren mit den Merkmalen des Anspruchs 1 und einer Vorrichtung mit den Merkmalen des Anspruchs 14 gelöst. Vorteilhafte Weiterbildungen der Erfindung sind Gegenstand der abhängigen Ansprüche.

Durch die Erfindung wird somit ein Verfahren zur Konturermittlung eines Objekts bei bildgebenden Untersuchungsverfahren zur Verfügung gestellt, bei denen vom Prüfobjekt mehrere Projektionsbilder in verschiedenen Winkelstellungen aufgenommen werden und eine dreidimensionale Darstellung des Untersuchungsobjektes rekonstruiert wird. Dabei werden für die Darstellung des Untersuchungsobjekts Volumendaten gewonnen. Gemäß der Erfindung wird eine außerhalb und innerhalb des Untersuchungsobjekts liegende und durch die lokale Umgebung eines ersten Konturpunkts verlaufende Profillinie festgelegt und Stützpunkte werden auf dieser vorgegeben. Entlang der Profillinie für die Stützpunkte werden die zugehörigen Rekonstruktionswerte bestimmt. Aus dem Verlauf der Rekonstruktionswerte entlang und/oder benachbart der Profillinie in der Konturpunktumgebung wird ein lokaler Schwellwert der Rekonstruktionswerte bestimmt oder es werden Positionen für den lokalen Hintergrundgrauwert und Objektgrauwert bestimmt. Auf der Profillinie wird dann ein lokaler Konturpunkt bestimmt.

Gemäß einer Variante des erfindungsgemäßen Verfahrens wird für die Bestimmung der Lage eines Konturpunktes jeweils ein erster Konturpunkt des Untersuchungsobjekts festgelegt, durch den die Profillinie gelegt wird. Dies ist beispielsweise der Fall bei Anwendung der Konturextraktion, was unten noch näher beschrieben wird.

Es kann jedoch auch für die Bestimmung der Lage eines Konturpunktes die Profillinie in den Übergangsbereich von Objekt und Hintergrund gelegt werden, ohne erst einen ersten Konturpunkt zu bestimmen bzw. zu benutzen.

Bei der vorzugsweise angewendeten Konturextraktion wird für die Lagebestimmung der Kontur aus dem rekonstruierten Volumen ein Schwellwert der Rekonstruktionswerte festgelegt und die Lage der Konturpunkte bestimmt. Das Extraktionsverfahren umfasst mehr im einzelnen, dass ein erster Schwellwert der Rekonstruktionswerte festgelegt wird, für die Bestimmung der Lage eines Konturpunktes jeweils ein erster Konturpunkt des Untersuchungsobjekts festgelegt wird, eine außerhalb und innerhalb des Untersuchungsobjekts liegende und durch den ersten Konturpunkt verlaufende Profillinie festgelegt und Stützpunkte auf dieser ermittelt werden. Entlang der Profillinie für die Stützpunkte werden die zugehörigen Rekonstruktionswerte z. B. durch Interpolation aus dem Volumendatensatz bestimmt. Aus dem Gradientenverlauf der Rekonstruktionswerte entlang und/oder benachbart der Profilline um den ersten Konturpunkt herum wird ein neuer lokaler Schwellwert bestimmt und auf der Profillinie wird der erste Konturpunkt zum Ort des lokalen Schwellwerts als zweiten Konturpunkt verschoben.

Das erfindungsgemäße Verfahren ist von der Ursache der Artefakte sowie von der absoluten Materialdichte und -homogenität unabhängig und ermöglicht daher eine genauere Konturermittlung als bei herkömmlichen Korrekturverfahren, die auf die Korrektur bestimmter Artefakte abgestellt sind.

Bei dem erfindungsgemäßen Extraktionsverfahren wird die Kontur vollständig erfasst und es liegt eine korrekte Vernetzung der Konturpunkte vor. Das Verfahren kann auf die gesamte Objektkontur, aber auch auf Teilbereiche angewendet werden. Der Einfluss des Bedieners ist durch die weitgehend automatische Festlegung des lokalen Schwellwerts minimiert, der an die lokal eventuell unterschiedlichen Grauwertniveaus angepasst ist und von der Wahl des ersten Schwellwerts unabhängig ist. Dadurch ist eine hohe Reproduzier- und Automatisierbarkeit des Extraktionsprozesses ermöglicht.

Das erfindungsgemäße Verfahren basiert auf Volumendaten. Die Lage der ersten Konturpunkte kann vorteilhaft mit einem Iso-Extraktionsverfahren, z. B. dem Marching-Cubes-Verfahren ermittelt werden, wodurch gleichzeitig die Vernetzung der Konturpunkte bestimmt werden kann. Alternativ können die ersten Konturpunkte über Kantenfindungsoperatoren oder Contour-Tracking-Algorithmen bestimmt werden. Möglich ist auch die Vorgabe von Konturpunkten, welche auf Flächen einer Vergleichsgeometrie (z. B. CAD oder einer anderen Geometrie) bzw. einer Regelgeometrie liegen, oder über die Definition von einzelnen Punkten (beispielsweise durch Koordinatenangabe).

Ergebnis der erfindungsgemäßen Methode ist die Lage der Konturpunkte (auch Punktewolke genannt) . Werden die ersten Konturpunkte z. B. über eine Iso-Extraktion bestimmt, kann mit der vorgestellten Methode zusätzlich zu den Konturpunkten eine Vernetzung angegeben werden. Die Oberflächenkontur kann somit als Facettenmodell dargestellt werden. Für letztere werden Orientierungsinformationen (z. B. Flächenorientierung, Vernetzung bzw. Verbindung der Flächen) mit benötigt.

Für jeden Konturpunkt wird aus dessen Umgebung in der dreidimensionalen Objektdarstellung (z. B. CT-Volumen) ein lokaler Schwellwert bestimmt. Hierfür wird der Grauwertübergang bzw. -sprung über Profillinien analysiert und anhand der ermittelten Rekonstruktionswerte und deren Verlauf (Gradient) nahe dem betrachteten Konturpunkt eine Anpassung des Schwellwerts an die lokale Umgebung im CT-Volumen vorgenommen.

Die Profillinien zur Untersuchung der Abtastwerte (Grauwerte) in Konturnähe können senkrecht zur Objektkontur liegen, aber auch in einem spitzen Winkel, etwa bis 15° beispielsweise, geneigt sein. Vielfach werden sie im Wesentlichen nahe der Normalenrichtung, auch hier beispielsweise bis 15°, verlaufen. Wesentlich ist, dass die Profillinien außerhalb und innerhalb des Objektes liegen, d. h. die Konturfläche durchstoßen. So kann beispielsweise auch zur Erzeugung einer Profillinie etwa eine Schnittlinie durch das Objekt gelegt werden und entlang dieser Schnittlinie der Grauwertgradient an der Objektkonturfläche untersucht werden. Eine Lagevariation führt zu keiner signifikanten Änderung des Ergebnisses, da das Messvolumen so genau abgetastet wird und für jedes Geometriemerkmal des untersuchten Körpers mehrere zig Stützpunkte extrahiert werden. Der durch die lokalen Extraktionsverfahren verursachte Eigenrauschanteil wird herausgemittelt.

Es kann auch ein Startpunkt, beispielsweise auf der Mittenachse eines Zylinders, festgelegt und von diesem aus die Profillinie bis in den Zylinderkörper hinein gelegt werden.

Die auf der Profillinie gewählten Stützpunkte können in festen Abständen vorgegeben werden, z. B. alle 0,1 Voxel. Eine mögliche Alternative ist, als Stützpunkte die Schnittpunkte der Profillinie mit Gitterfläche (aufgespannt über 2 x 2 Voxelumgebung) im CT-Volumen zu definieren. Der Abstand der Stützpunkte muss so sein, dass der Verlauf der Rekonstruktionswerte ausreichend genau ermittelt werden kann. Die Grauwerte an den Stützpunkten ergeben sich aus interpolierten Werten von Volumendaten, beispielsweise CT-Volumen.

Erfolgt die Definition der ersten Konturpunkte über eine Iso-Extraktion, so muss zunächst ein Start-Schwellwert vorgegeben werden. Dieser sollte zwischen den Grauwerten von Material und Umgebung liegen. Wie noch gezeigt wird und bereits erwähnt wurde, wirkt sich der konkrete Wert des Startschwellwerts im Wesentlichen nicht auf die Genauigkeit der erfindungsgemäßen Konturermittlung aus.

Bei der Iso-Extraktion gemäß dem Stand der Technik hingegen werden aufgrund verschiedener Grauwertniveaus im rekonstruierten Volumen, z.B. verursacht durch das Strahlaufhärtungsartefakt, eine Oberflächenkontur extrahiert, welche von der wahren Bauteilgeometrie lokal verschiedene Abweichungen aufweist. Dies ist dadurch begründet, dass anhand eines einzigen Schwellwerts die verschiedenen Grauwertniveaus im rekonstruierten Volumen nicht berücksichtigt werden können.

Die Definition des Grauwertverlaufs zur Ermittlung des lokalen Schwellwerts ist im Wesentlichen auf die Ermittlung des steilsten Bereichs gerichtet, d. h. den Wendepunkt. Hierzu sind mehrere Vorgehensweisen möglich. Bevorzugt ist es, für die Bestimmung des lokalen Schwellwerts den stärksten negativen Wert der Gradienten aus dem Grauwertverlauf (maximalen lokalen Grauwertgradienten) entlang der nach außen gerichteten Profillinie zu bestimmen und den zugehörigen Rekonstruktionswert als lokalen Schwellwert zu verwenden. Der erste Konturpunkt wird entlang der Profillinie zum Ort des steilsten negativen Grauwertgradienten verschoben und somit der zweite und genauere Konturpunkt ermittelt.

Gemäß einer anderen bevorzugten Alternative des erfindungsgemäßen Verfahrens wird für die Bestimmung des lokalen Schwellwerts ausgehend vom ersten Konturpunkt oder vom Ort des stärksten negativen Gradienten entlang der nach auswärts gerichteten Profillinie jeweils ein Objekt und ein Hintergrundrekonstruktionswert (lokaler Werkstück- und Hintergrundgrauwert) bestimmt und diese Werte zur Bestimmung des lokalen Schwellwerts verwendet . Gemäß einer vorteilhaften Verfahrensvariante wird der Mittelwert als lokaler Schwellwert verwendet. Das heißt, der lokale Schwellwert wird über den lokalen Mittelwert von Objekt- und Hintergrundgrauwert ermittelt. Für die Festlegung des lokalen Grauwertes für Objekt und Hintergrund ist es möglich, einen vom Benutzer vorgegebenen Mindestgrauwertgradienten zu benutzen, z. B. -1000 1/vox. Dieser Mindestgrauwertgradient dient dazu, bei der Suche nach den beiden lokalen Grauwerten für Werkstück und Hintergrund den Einfluss von Rauschen und Strahlaufhärtung zu minimieren.

Statt der Verwendung der Rekonstruktionswerte von Objekt und Hintergrund entlang der Profillinie können zur Ermittlung der Konturpunktposition auch jeweils diesen Rekonstruktionswerten zugeordnete Ortspunkte verwendet werden.

Zur Verringerung der Unsicherheit bei der Festlegung des lokalen Schwellwerts, die beispielsweise durch Rauschen der Volumendaten verursacht wird, können benachbart der Profillinie weitere Profillinien abgetastet werden, aus diesen lokale Schwellwerte bestimmt werden und aus den lokalen Schwellwerten ein gemittelter Schwellwert bestimmt werden. Es können hierbei Profillinien verwendet werden, welche durch benachbarte Konturpunkte verlaufen, oder zusätzliche Profillinien z. B. kreisförmig um die betrachtete Profillinie gelegt werden, wobei die Anordnung der Profillinien über die Anzahl der Kreise ($k_{ges}$ = 1, 2, 3, etc.), und das radiale Abstandsinkrement der Kreise (z. B. $r_k$ = 1,5 vox) sowie die Anzahl der Profillinien pro Kreis (z. B. $n_{Kreis1}$, = 8, $n_{Kreis2}$ = 16, $n_{Kreis3}$ = 24, etc.) vom Benutzer variiert werden können.

Auch ist es möglich, statistische Ausreißer bei Bestimmung des lokalen Schwellwerts über eine Toleranzbedingung zu erfassen und bei der Mittelwertberechnung unberücksichtigt zu lassen.

Das CT-Volumen bleibt bei dem erfindungsgemäßen Extraktionsprozess unverändert. Es muss auch nicht vorkorrigiert werden. Aufgrund dessen kann die Rechenzeit minimiert werden.

Die erfindungsgemäße Methode der Konturermittlung ist gegenüber herkömmlichen Verfahren deutlich genauer. So wurde bei einer dünnwandigen Innenkontur eine Abweichung der Messwerte von der wahren Objektgeometrie von ca. 0,5 bis 1,5 vox (Iso-Extraktion) auf weniger als 0,3 vox reduziert. Im konkreten Fall konnte die systematische Durchmesserabweichung an einer Hohlzylindergeometrie (rekonstruierte Auflösung: vox = 30 $\mu$m) von 15 bis 45 $\mu$m auf weniger als 9 $\mu$m reduziert werden, ein Düsenkörper (rekonstruierte Auflösung: vox = 8 $\mu$m) konnte auf 1 bis 4 $\mu$m genau erfasst werden. Für messtechnische Anwendungen, die Konturerfassung einer Bauteilgeometrie für Reverse-Engineering-Anwendungen (Rapid Prototyping und Simulation) sowie die Erfassung von medizinisch relevanten Informationen, etwa für die Prothetik, ist das erfindungsgemäße Verfahren daher sehr geeignet.

Das erfindungsgemäße Verfahren kann in verschiedenen Alternativen eingesetzt werden. In der Grundversion sozusagen wird nur die Feinjustierung der Konturpunkte durchgeführt, wobei von Rekonstruktionswerten in der lokalen Konturpunktumgebung des Untersuchungsobjekts ausgegangen wird. In einer anderen Ausführungsweise wird von den Extraktionsdaten ausgegangen, somit im Falle einer Iso-Extraktion von Isopunkten. Es kann aber auch eine Verknüpfung mit einer Extraktionsmethode angewendet werden und dann beispielsweise unter Verwendung der Iso-Schwellwerte die Isopunkte ermittelt werden. Andere Varianten umfassen die Rekonstruktion mit, d. h. Grauwertbestimmung. Das erfindungsgemäße Verfahren kann aber auch in das Messverfahren mit integriert werden, d. h. in die Projektionsdatengewinnung, Bestimmung der Rekonstruktionswerte und das Extraktionsverfahren. Diese Flexibilität ist durch die Unabhängigkeit von der exakten Lage des in üblicher Weise ermittelten jeweiligen Konturpunkts gegeben, denn die Erfindung setzt nicht bei diesem Punkt, sondern in dessen lokaler Umgebung an und kann dann bereits den genaueren lokalen Konturpunkt bestimmen.

Durch die Erfindung ist auch eine Vorrichtung zur Konturermittlung eines Objekts bei bildgebenden Verfahren geschaffen worden, bei denen ein Volumenmodell des Untersuchungsobjekts mit Rekonstruktionswerten verwendet wird und die Lage der Konturpunkte bestimmt wird. Es ist eine Extraktionsvorrichtung vorgesehen, die Mittel umfasst, die eine außerhalb und innerhalb des Untersuchungsobjekts liegende und durch die lokale Umgebung der Objektkontur verlaufende Profillinie festlegen und Stützpunkte auf dieser vorgeben. Weiter ist eine Einrichtung vorgesehen, die entlang der Profillinie für die Stützpunkte die zugehörigen Rekonstruktionswerte bestimmt und aus dem Verlauf der Rekonstruktionswerte entlang und/oder benachbart der Profilline in der Konturpunktumgebung einen lokalen Schwellwert der Rekonstruktionswerte bestimmt oder Positionen für den lokalen Hintergrundgrauwert und Objektgrauwert bestimmt. Es ist eine Einrichtung vorgesehen, die auf der Profillinie einen lokalen Konturpunkt bestimmt.

Ein Ausführungsbeispiel der erfindungsgemäßen Vorrichtung umfasst eine Einrichtung zur Extraktion der Lage der Kontur aus der dreidimensionalen Objektdarstellung, welche über einen Schwellwert festgelegt wird, und die Lage der Konturpunkte bestimmt. Die Extraktionseinrichtung umfasst Mittel, die einen ersten Schwellwert der Abtastwerte festlegen, Mittel für die Bestimmung der Lage eines Konturpunktes, die jeweils einen ersten Konturpunkt des Untersuchungsobjekts festlegen, sowie Mittel, die um den ersten Konturpunkt herum einen neuen lokalen Schwellwert der Rekonstruktionswerte bestimmen. Ferner ist eine Einrichtung vorgesehen, die auf der Profillinie den ersten Konturpunkt zu einem zweiten Konturpunkt am Ort des lokalen Schwellwerts verschiebt.

Die Erfindung wird im Folgenden weiter anhand von Ausführungsbeispielen näher erläutert. In der Zeichnung zeigen:

Fig. 1 eine schematische Darstellung des Messaufbaus bei der Mikrocomputertomographie,

Fig. 2 ein Grauwert-Profildiagramm, das den durch das sogenannte Strahlaufhärtungsartefakt bedingten Verlauf der rekonstruierten Grauwerte durch eine dreidimensionale Rekonstruktion eines in Fig. 3 im Aufbau gezeigten Zylinders darstellt,

Fig. 3 in der mittleren Ansicht einen axialen Längsschnitt und darüber und darunter einen Schnitt im Bereich der dünneren bzw. dickeren Wandstärke des Zylinders von Fig. 2,

Fig. 4 eine Veranschaulichung der Konturpunktermittlung mittels des steilsten Grauwertgradienten,

Fig. 5 und 6 eine Veranschaulichung der Konturpunktermittlung unter Verwendung eines Mittelwerts aus Grauwert des Werkstücks und des Hintergrundes,

Fig. 7 eine Gegenüberstellung der Konturpunktermittlung nach dem Stand der Technik (Iso-Extraktion) und gemäß der Erfindung nach der Methode von Fig. 5 und 6,

Fig. 8 eine Gegenüberstellung von Messungen einer Hohlzylinderbohrung nach dem Stand der Technik (Iso-Extraktion) und gemäß der Erfindung nach der Methode von Fig. 5 und 6 und

Fig. 9 eine Darstellung der systematischen Abweichung und Schwellwertsensitivität mit Gegenüberstellung von Messungen eines Spritzlochs eines Düsenkörpers nach dem Stand der Technik (Iso-Extraktion) und gemäß der Erfindung nach der Methode von Fig. 5 und 6.

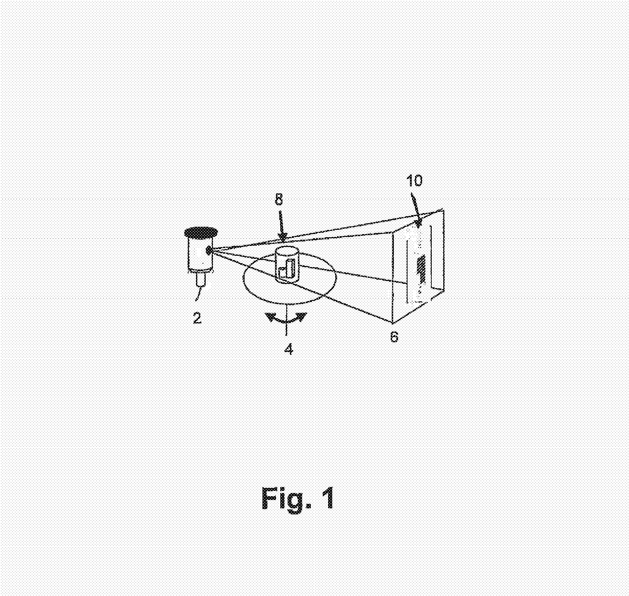

Fig. 1 zeigt den Messaufbau einer Vorrichtung zur Durchführung des erfindungsgemäßen Verfahrens, hier realisiert als Mikrocomputertomographie. Eine Röntgenquelle 2 mit einer Röhrenspannung bis zu 225 kV, maximaler Röhrenleistung von 320 W und einer minimalen Fokusgröße von 3 bis 5 µm wurde als Strahlenquelle eingesetzt. In den Projektionsstrahl eingebracht befand sich das jeweils zu untersuchende Objekt 8, das auf einem Manipulator 4 angeordnet war. Der Manipulator 4 hatte die Aufgabe, das Objekt 8 während der Messung zu drehen, zu verschieben oder zu kippen, so dass das Objekt 8 durch eine Vielzahl von aufgenommenen Winkelstellungen praktisch vollständig in seiner 3D-Struktur erfasst werden konnte. Die Projektionsstrahlen wurden von einem Detektor 6 (Flat-Panel-Detektor) aufgenommen, der die Röntgenstrahlung über den Röntgenkonverter in zunächst sichtbares Licht und anschließend in ein Signal umwandelte. Derartige Detektoren bestehen typischerweise aus 512 x 512 bis 2048 x 2048 Detektorpixelelementen (Pixelgröße 0,200 bis 0,400 mm). Der Detektor gibt ein Projektionsbild 10 zur Weiterverarbeitung aus. Statt des beschriebenen Aufbaus können auch andere Messaufbauten verwendet werden, beispielsweise sogenannte Röntgenbildverstärker mit CCD-Chip, Dünn-Schicht-Transistoren mit amorphem Selen oder einer kristallinen Cadmium-Zink-Tellurid-Schicht oder Zeilendetektoren. Für große Bauteile (z. B. Motorkomponenten) werden Makro-CT-Anlagen verwendet, die über eine leistungsstärkere Röntgenröhre mit einer Röntgenenergie von z. B. 450 kV arbeiten und einen Flächen- bzw. Zeilendetektor verfügen.

Zur Berechnung des CT-Volumens ist die Verteilung der linearen Schwächungskoeffizienten $\mu(x, y, z)$ zu berechnen. Hierbei muss folgende Gleichung mit einem geeigneten Rekonstruktionsverfahren gelöst werden:

$$S_{p,q,\theta}^{m} = S'_{L,m} \cdot e^{-\int_s \mu(x,y,z)ds} \qquad (1)$$

Für die Rekonstruktion des CT-Volumens aus den Projektionsdaten gibt es algebraische und analytische Methoden. Als Standard für die Rekonstruktion der Kegelstrahl-CT hat sich die Methode der gefilterten Rückprojektion etabliert, welche zu den analytischen Methoden zählt, siehe z. B. Feldkamp, L.A.; Davis, L. c; Kress, J.W. "Practical cone-beam algorithm" , J. Opt. Soc. Amer., Vol. 1 (56), S. 612 bis 619, 1984.

Der rekonstruierte CT-Volumendatensatz wird mit einer Matrix von Volumenelementen, den Voxeln, visualisiert. Ihre Lage ist durch Spalte, Reihe und Schicht definiert. Jedes Voxel repräsentiert den Wert des örtlichen linearen Schwächungskoeffizienten $\mu$ (x, y, z), welcher als Rekonstruktionswert bzw. Grauwert ausgedrückt wird. Zur Visualisierung werden den Voxeln in Abhängigkeit ihres Rekonstruktionswertes Grautöne zugewiesen. Je höher der Rekonstruktionswert ist, desto heller wird das betreffende Voxel dargestellt.

Statt oder zusätzlich einer Visualisierung können die Voxel auch direkt weiterverarbeitet werden. Es kann statt einer 3D-Matrix auch ein Stapel von Schichtbildern benutzt werden. Schließlich ist auch die Auswertung von 2D-Bildern denkbar.

Bei der nachfolgenden Konturextraktion wurde das CT-Volumenmodell in ein Flächenmodell überführt. Dieses beschreibt mit einer Vielzahl von Stützpunkten die Kontur des Werkstücks. Es wurde die übliche Methode der Marching Cubes mit Ansatz eines globalen Schwellwerts $G_{iso}$ bis zur Ermittlung der Isopunkte auf den Voxel-Würfelkanten angewendet, wobei Informationen über die Oberflächenvernetzung und Startwerte für die Berechnung der Konturlage erhalten wurden. Anschließend wurde gemäß der Erfindung der Schwellwert für jeden Konturpunkt an dessen lokale Umgebung im CT-Volumen angepasst. Im konkreten Fall wurden Profillinien benutzt, die senkrecht zur Objektkontur lagen. Diese Bedingung ist jedoch nicht zwingend, die Profillinien müssen für die Ermittlung des lokalen Schwellwerts lediglich außerhalb und innerhalb des untersuchten Objekts verlaufen.

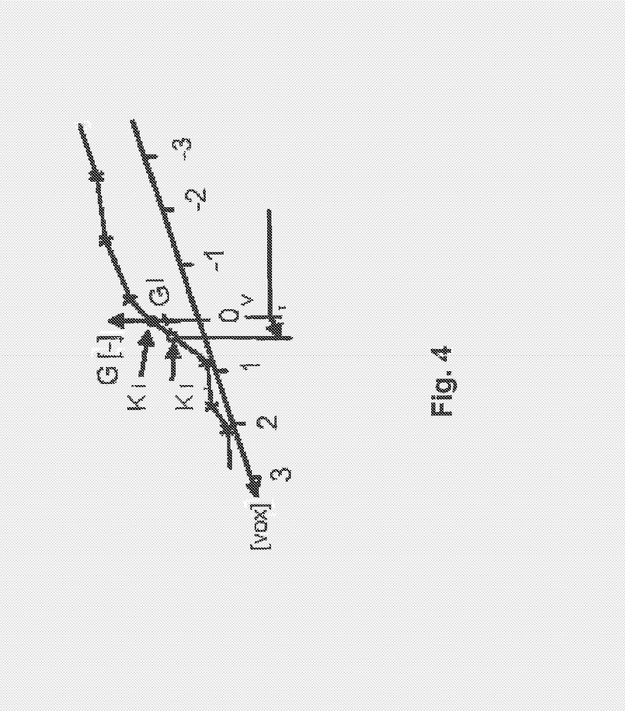

Als erstes wird die Methode der Konturpunktermittlung mittels der stärksten Grauwertgradienten beschrieben. Für jeden Isopunkt $K_i$, der der erste ermittelte Konturpunkt ist, wurden die Normalenrichtungen der beiden benachbarten Voxelwerte bestimmt, wobei in Abhängigkeit von der Entfernung zum Isopunkt interpoliert wurde, und so die nach außen gerichtete zu dem Isopunkt $K_i$ gehörige Einheitsnormale bestimmt wurde. Anschließend wurde der Grauwertverlauf entlang der in Richtung der Normalen verlaufenden Profillinie ermittelt. Dazu wurden die Grauwerte der Schnittpunkte der Profillinien bzw. Normalen durch die Gitterflächen des CT-Volumens bestimmt und die zugehörigen Grauwerte mit den vier benachbarten Voxelwerten interpoliert. Die Profillinie wurde dann in der lokalen Umgebung des Isopunkts $K_i$ (z. B. $\pm$ 5 vox) betrachtet, auf den Abschnitt mit dem maximalen negativen Grauwertgradienten G hin untersucht und der zugehörige Grauwert $G_0$ wurde ermittelt. Zusätzlich wurden noch n Umgebungsnormalen auf deren lokale maximale negative Grauwertgradienten G und die zugehörigen Grauwerte $G_0$ hin untersucht. Nach der Auswertung all dieser Profillinienverlaufe wurde aus den bestimmten Grauwerten am steilsten Ort der lokale Schwellwert $G_1$ durch Mittelwertbildung bestimmt. Anschließend wurde der Schnittpunkt des lokalen Schwellwerts $G_1$ mit der Profillinie, welche durch den Isopunkt verläuft, ermittelt. Der Konturpunkt wurde dann von dem Isopunkt $K_i$ aus entlang der Isopunktnormalen zu dem Punkt mit dem lokalen Schwellwert hin um den Abstand v verschoben und so der neue lokale Konturpunkt $K_i$ bestimmt. Dies ist in Fig. 4 veranschaulicht.

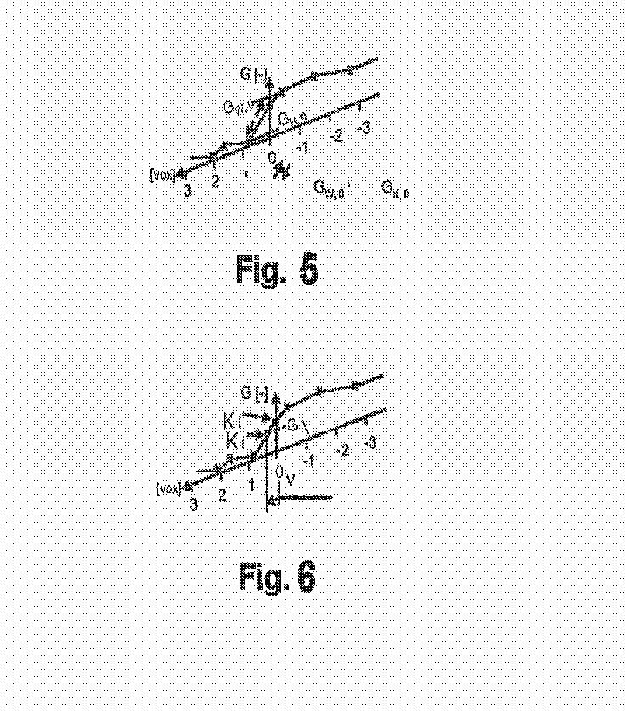

In Fig. 5 und 6 ist die Methode der Konturpunktermittlung unter Verwendung eines Mittelwerts aus Grauwerten des Werkstücks und des Hintergrundes erläutert. Analog zu der obenstehend beschriebenen Methode der Konturpunktermittlung mittels der stärksten Profilliniengradienten wurden wiederum zunächst die Isopunktnormale und die zugehörige Profillinie ermittelt. Entlang der Profillinie wurde - ausgehend von dem Abschnitt mit dem steilsten Grauwertgradienten - der lokale Werkstück- und Hintergrundgrauwert $G_{w,0}$ bzw. $G_{H,0}$ ermittelt. Bei der Bestimmung der beiden Werte wurde ein Abbruchkriterium verwendet, hier ein Mindestgrauwertgradient, welcher vom Benutzer vorgegeben werden kann. Dieser Mindestgrauwertgradient dient dazu, bei der Suche nach den beiden lokalen Grauwertschwellwerten für Werkstück und Hintergrund den Einfluss von Rauschen und Strahlaufhärtung zu minimieren. Bei den Fig. 5 und 6 zugrundeliegenden Versuchen wurde ein Gradient von -1000 1/vox gewählt. Der lokale Schwellwert $G_1$ wurde aus dem Mittelwert von lokalen Material-und Hintergrundgrauwerten berechnet. Anschließend wurden auch Umgebungsprofillinien auf die lokalen Grauwerte von Werkstück und Hintergrund ausgewertet. Aus den bestimmten Werten für die Isopunkt- und Umgebungsnormalen wurde der lokale Schwellwert $G_1$ bestimmt. Aus dem Schnittpunkt des lokalen Schwellwerts $G_1$ mit der Grauwertprofillinie entlang der Isopunktnormale wurde der Verschiebungsvektorbetrag v des Isopunktes $K_1$ berechnet. Der neue Konturpunkt $K_i$ wird durch Verschieben des Isopunktes $K_i$ um den Betrag v in bzw. gegen die Isopunktnormalenrichtung erzeugt. Es hat sich gezeigt, dass diese Methode nur ein geringes Eigenrauschen aufweist.

Die zusätzliche Auswertung umgebender Profillinien wie beschrieben ermöglicht eine verbesserte Auswertesicherheit. Die Umgebungsprofillinien können beispielsweise durch benachbarte Isopunkte verlaufen oder auf Kreise gelegt werden und jeweils eine Umgebungsnormale repräsentieren. Der lokale Schwellwert wird als Mittelwert der Grauwerte der Isopunkt- und Umgebungsnormalen bestimmt.

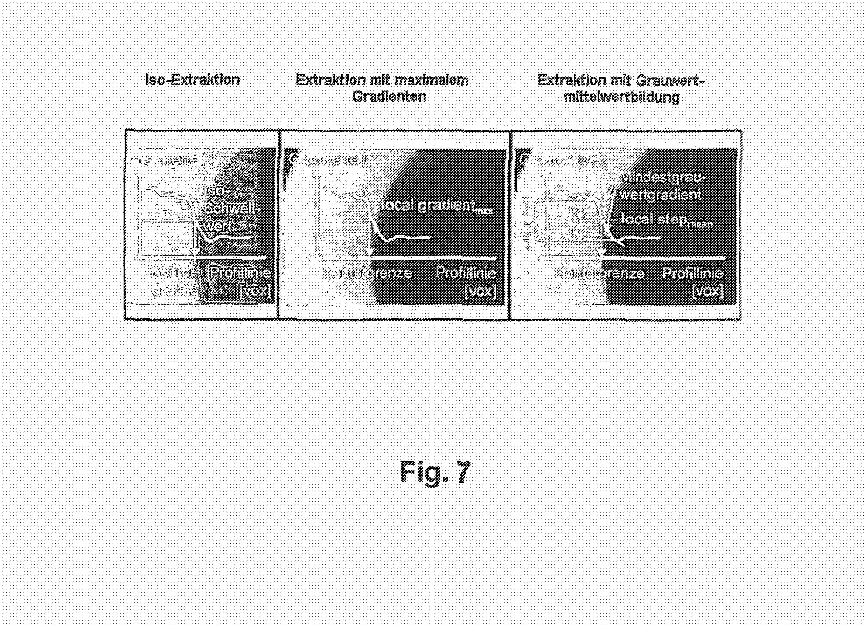

In Fig. 7 sind die beiden erfindungsgemäßen Verfahren im Vergleich zur Konturermittlung mittels Iso-Extraktion einander gegenübergestellt, um die Unterschiede zu verdeutlichen. Bei der ganz links dargestellten Iso-Extraktion werden die Konturpunkte anhand des vorgegebenen Schwellwerts $G_1$ und den benachbarten Voxelgrauwerten durch Interpolation ermittelt. Hier setzt dann die erfindungsgemäße Methode an. In der Mitte ist die Extraktion mit maximalem lokalen

Gradienten (local gradient$_{max}$) gezeigt, veranschaulicht durch die Tangentendarstellung. Der Ansatz mit Werkstückgrauwert und Umgebungsgrauwert (local step) sowie Vorgabe eines Mindestgrauwertgradienten, der zum mittleren lokalen Schwellwert G$_1$ (local step$_{mean}$) führt, ist rechts in Fig. 7 gezeigt.

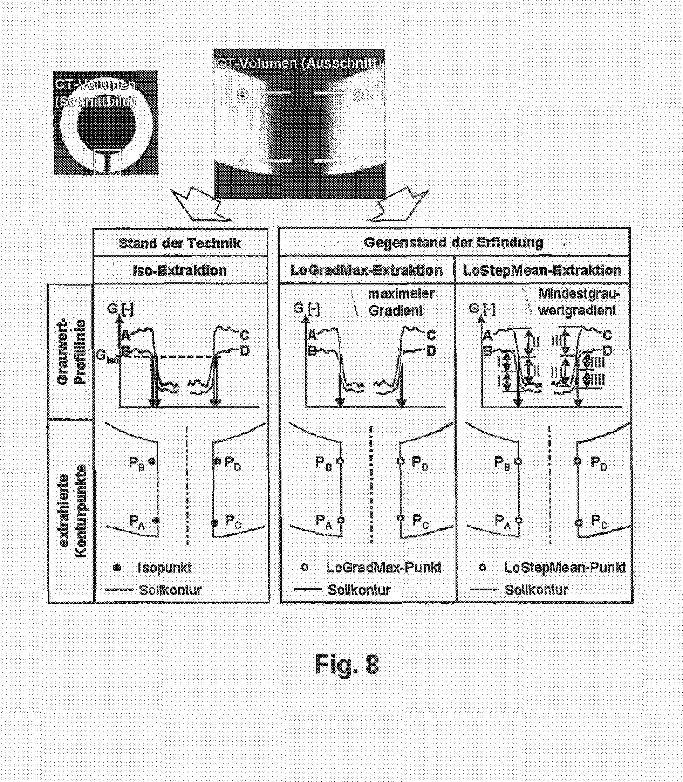

Im Folgenden wird unter Bezugnahme auf Fig. 8 die erfindungsgemäße Konturpunktermittlung anhand von Beispielen und im Vergleich zu bekannten Verfahren weiter veranschaulicht. Der untersuchte Körper ist ein Hohlzylinder mit einer radial durch seine Wand verlaufenden Bohrung, deren wahre Geometrie über eine Kalibriermessung bekannt ist und oben links im Schnitt gezeigt ist. Oben rechts ist ein vergrößerter Ausschnitt dargestellt, aus dem die Lage der Punkte an den Grauwertübergängen A (außen) und B (innen) sowie C (außen) und D (innen) hervorgeht, wobei die zugehörigen Konturpunkte P$_A$, P$_B$, Pc und P$_D$ betrachtet werden. Das CT-Volumen ist von einem Strahlaufhärtungsartefakt überlagert, dessen Auswirkungen Fig. 8 veranschaulicht. Die Grauwertübergänge B und D in der Nähe der Innenkontur des Hohlzylinders sind vom Strahlaufhärtungsartefakt stark beeinflusst. Die Grauwertniveaus von B und D liegen unterhalb der - von dem Strahlaufhärtungsartefakt weitgehend unbeeinflussten - Bereiche A und C. Die bei der Iso-Extraktion für die Grauwertübergänge B und D berechneten Konturpunkte P$_B$ und P$_D$ weisen eine große systematische Abweichung zur wahren Bauteilgeometrie auf. Mit den beiden erfindungsgemäßen lokalen Schwellwertverfahren LoGradMax (Extraktion mit maximalem Gradienten) und LoStepMean (Extraktion mit Mittelwertbildung von lokalem Objekt- und Hintergrundgrauwert) können die vom Strahlaufhärtungsartefakt bedingten lokal unterschiedlichen Grauwertniveaus größtenteils ausgeglichen werden. Die lokal angepasste Extraktion verursacht eine deutlich geringere systematische Abweichung als die Iso-Extraktion (Stand der Technik).

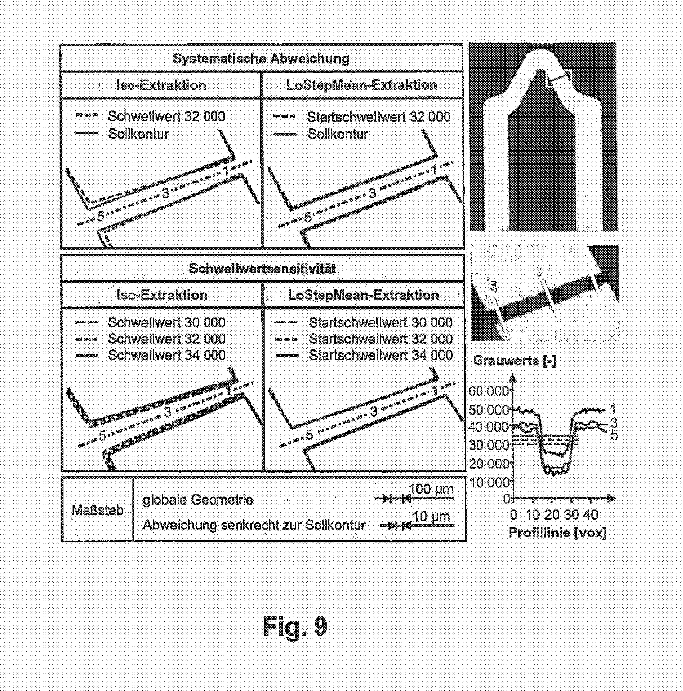

Fig. 9 liefert ein Beispiel für die hohe Messgenauigkeit, die mit dem erfindungsgemäßen Verfahren erreicht werden kann, und zwar auch in dem Fall, in dem die Grauwertniveaus des Probenkörpers, eines kalibrierten Düsenkörpers, nicht homogen sind. Wie die Schnittdarstellung rechts oben links und das Grauwertprofilliniendiagramm rechts unten zeigen, fällt das Grauwertniveau vom Spritzlochaustritt zum Spritzlocheintritt ab. Bei der Iso-Extraktion wird das nicht berücksichtigt und dies führt zu Messungenauigkeiten von ca. 10 $\mu$m. Während der Spritzlochdurchmesser am Spritzlocheinritt (Punkt 5) zu groß bestimmt wird, wird er am Spritzlochaustritt (Punkt 1) zu klein bestimmt, so dass durch die Messung eine Konusform des Spritzlochs ermittelt wird, die von der tatsächlichen Lochkontur abweicht. Das erfindungsgemäße lokale Schwellwertverfahren (Extraktion mit Mittelwertbildung der lokalen Grauwerte) passt sich an die unterschiedlichen Grauwertniveaus an und ermöglicht eine Konturerfassung mit einer systematischen Abweichung von ca. 1 bis 4 $\mu$m bei einer Voxelkantenlänge von etwa 8 $\mu$m.

Obenstehend ist die Erfindung am Beispiel der Röntgentomographie, der Untersuchungen von Werkstücken sowie der Methoden der Extraktion mit maximalem Gradienten bzw. mit Mittelwertbildung von lokalen Hintergrund- und Objektgrauwerten erläutert worden. Selbstverständlich kann das erfindungsgemäße Konturermittlungsverfahren auch zu anderen Untersuchungszwecken, beispielsweise bei Riss- und Materialuntersuchungen, im Bereich der Medizin und auch mit anderen Methoden und Varianten der Bestimmung des lokalen Konturpunkts angewendet werden.

**Patentansprüche**

1. Verfahren zur Konturfeinermittlung eines Objekts bei bildgebenden Untersuchungsverfahren, bei denen ein Volumenmodell des Objekts mit Rekonstruktionswerten verwendet wird und die Lage der Konturpunkte bestimmt wird, **dadurch gekennzeichnet, dass**
   eine außerhalb und innerhalb des Objekts liegende und durch die lokale Umgebung der Objektkontur verlaufende Profillinie festgelegt und Stützpunkte auf dieser vorgegeben werden,
   entlang der Profillinie für die Stützpunkte die zugehörigen Rekonstruktionswerte bestimmt werden,
   aus dem Verlauf der Rekonstruktionswerte entlang und/oder benachbart der Profilline in der Konturpunktumgebung zur Konturfeinermittlung der steilste Bereich, insbesondere Wendepunkt, Maximum des lokalen Rekonstruktionswertgradienten, oder ein lokaler Schwellwert (G$_1$) der Rekonstruktionswerte bestimmt wird oder Positionen für den lokalen Hintergrundgrauwert (G$_H$) und Objektgrauwert (G$_o$) bestimmt werden und
   auf der Profillinie ein lokaler Konturpunkt (K$_i$) bestimmt wird.

2. Verfahren nach Anspruch 1,
   **dadurch gekennzeichnet,**
   **dass** für die Bestimmung der Lage eines Konturpunktes jeweils ein erster Konturpunkt des Untersuchungsobjekts festgelegt wird, durch den die Profillinie gelegt wird, oder dass für die Bestimmung der Lage eines Konturpunktes die Profillinie in den Übergangsbereich von Objekt und Hintergrund gelegt wird.

3. Verfahren nach Anspruch 1 oder 2 ,
   **dadurch gekennzeichnet,**
   **dass** für die Lagebestimmung der Kontur der dreidimensionalen Objektdarstellung ein Schwellwert der Rekonstruktionswerte (G) festgelegt wird und aus diesem der erste Konturpunkt bestimmt wird, wobei insbesondere den Rekonstruktionswerten Grauwerte (G) zugeordnet werden.

**4.** Verfahren nach einem der Ansprüche 1 bis 3,
**dadurch gekennzeichnet,**
**dass** über mehrere Projektionen eine dreidimensionale Darstellung des Untersuchungsobjektes rekonstruiert wird, wobei für die Darstellung des Untersuchungsobjekts Volumendaten gewonnen werden.

**5.** Verfahren nach einem der Ansprüche 1 bis 4,
**dadurch gekennzeichnet,**
**dass** als Profillinie eine Normale oder davon um bis zu etwa 15°, vorzugsweise bis zu 10° abweichende Gerade verwendet wird.

**6.** Verfahren nach einem der Ansprüche 1 bis 5,
**dadurch gekennzeichnet,**
**dass** als erster Konturpunkt ($K_i$) ein durch Konturextraktion, vorzugsweise Isoflächenextraktion, bestimmter Punkt verwendet wird, wobei insbesondere der erste Konturpunkt mittels Koordinaten festgelegt wird.

**7.** Verfahren nach einem der Ansprüche 1 bis 6,
**dadurch gekennzeichnet,**
**dass** die für die Bestimmung des entlang der Profillinie bestimmten Verlaufs der Rekonstruktionswerte aus Nachbarvoxeln interpoliert wird.

**8.** Verfahren nach einem der Ansprüche 1 bis 7,
**dadurch gekennzeichnet,**
**dass** für die Bestimmung des lokalen Schwellwerts ($K_i$) der stärkste negative Gradient der auf der nach außen gerichteten Profillinie bestimmt wird und der zugehörige Rekonstruktionswert als lokaler Schwellwert verwendet wird und/oder dass für die Bestimmung des lokalen Schwellwerts ausgehend von einem vorgegebenen Startschwellwert oder ausgehend von dem stärksten negativen Gradienten entlang der nach außen gerichteten Profillinie zunächst entlang derselben jeweils ein Objekt- und ein Hintergrundrekonstruktionswert ($G_w$, $G_H$) bestimmt wird und diese als Grenzwerte zur Bestimmung des lokalen Schwellwerts ($G_1$) verwendet werden.

**9.** Verfahren nach zumindest Anspruch 8,
**dadurch gekennzeichnet,**
**dass** ein Mittelwert aus dem lokalen Hintergrundgrauwert ($G_H$) und Objektgrauwert ($G_w$) als lokaler Schwellwert ($G_1$) verwendet wird.

**10.** Verfahren nach zumindest einem der Ansprüche 1 bis 9,
**dadurch gekennzeichnet,**
**dass** für die Bestimmung des lokalen Schwellwerts ausgehend von einem vorgegebenen Startschwellwert oder ausgehend von dem stärksten negativen Wert der Gradienten entlang der nach aussen gerichteten Profillinie zunächst entlang derselben jeweils ein Objekt- und ein Hintergrundrekonstruktionswert ($G_w$, $G_H$) bestimmt wird und diesem lokalen Objekt- und Hintergrundrekonstruktionswert auf der Profillinie zugeordnete Ortspunkte zur Bestimmung der Position des Konturpunkts verwendet werden.

**11.** Verfahren nach einem der Ansprüche 1 bis 10,
**dadurch gekennzeichnet,**
**dass** benachbart der Profillinie weitere Profillinien abgetastet werden, aus diesen lokale Schwellwerte bestimmt werden und aus den lokalen Schwellwerten ein gemittelter Schwellwert bestimmt wird.

**12.** Computerprogrammprodukt zur Umsetzung eines Verfahrens nach einem der Ansprüche 1 bis 11.

**13.** Anwendung des Verfahrens nach einem der Ansprüche 1 bis 12 bei der Computer- und Magnetresonanztomographie und/oder bei der 3D-Ultraschall-Messung und/oder bei der Messtechnik.

**14.** Vorrichtung zur Konturfeinermittlung eines Objekts bei bildgebenden Untersuchungsverfahren, bei denen ein Volumenmodell des Objekts mit Rekonstruktionswerten verwendet wird und die Lage der Konturpunkte bestimmt wird, insbesondere zur Verwendung bei einem Verfahren nach einem der Ansprüche 1 bis 13,

**dadurch gekennzeichnet,**

**dass** eine Extraktionsvorrichtung vorgesehen ist, die Mittel umfasst, die eine außerhalb und innerhalb des Objekts liegende und durch die lokale Umgebung der Objektkontur verlaufende Profillinie festlegen und Stützpunkte auf dieser vorgeben,

eine Einrichtung vorgesehen ist, die entlang der Profillinie für die Stützpunkte die zugehörigen Rekonstruktionswerte bestimmt und aus dem Verlauf der Rekonstruktionswerte entlang und/oder benachbart der Profilline in der Konturpunktumgebung zur Konturfeinermittlung der steilste Bereich, insbesondere Wendepunkt, Maximum des lokalen Rekonstruktionswertgradienten, oder einen lokalen Schwellwert ($G_1$) der Rekonstruktionswerte bestimmt oder Positionen für den lokalen Hintergrundgrauwert und Objektgrauwert bestimmt und

eine Einrichtung vorgesehen ist, die auf der Profillinie einen lokalen Konturpunkt ($K_i$) bestimmt.

15. Vorrichtung zur Konturermittlung eines Objekts bei bildgebenden Untersuchungsverfahren nach Anspruch 14,
**dadurch gekennzeichnet,**

**dass** eine Einrichtung (2, 4, 6) zur Abtastung von Projektionsdaten eines Objekts (8) vorgesehen ist,

eine Einrichtung zur Rekonstruktion einer dreidimensionalen Darstellung des Objektes aus den Abtastwerten vorgesehen ist, die für die Darstellung des Objekts Volumendaten gewinnt,

eine Einrichtung zur Extraktion der Lage der Kontur aus der dreidimensionalen Objektdarstellung vorgesehen ist, welche über einen Schwellwert der Rekonstruktionswerte festlegt wird, und die Lage der Konturpunkte bestimmt,

die Extraktionseinrichtung Mittel umfasst, die einen ersten Schwellwert der Abtastwerte ($G_i$) festlegen,

die Extraktionseinrichtung Mittel für die Bestimmung der Lage eines Konturpunktes umfasst, die jeweils einen ersten Konturpunkt ($K_i$) des Objekts festlegen, und Mittel umfasst, die aus dem Verlauf der Rekonstruktionswerte um den ersten Konturpunkt ($K_i$) herum einen neuen lokalen Schwellwert ($G'$) der Rekonstruktionswerte bestimmen,

und eine Einrichtung vorgesehen ist, die auf der Profillinie den ersten Konturpunkt zu einem zweiten Konturpunkt ($K_1$) am Ort des lokalen Schwellwerts verschiebt.

Fig. 1

Fig. 2

Fig. 3

Fig. 4

Fig. 5

Fig. 6

Fig. 7

Fig. 8

**Fig. 9**

Europäisches
Patentamt

European
Patent Office

Office européen
des brevets

**EUROPÄISCHER RECHERCHENBERICHT**

Nummer der Anmeldung

EP 11 17 4162

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | MCCARTHY S ET AL: "Segmentation algorithm for objects with very low edge contrast", PROCEEDINGS OF THE SPIE - THE INTERNATIONAL SOCIETY FOR OPTICAL ENGINEERING SPIE-INT. SOC. OPT. ENG USA, Bd. 5608, Nr. 1, 2004, Seiten 162-168, XP002404854, ISSN: 0277-786X | 1-7, 11-15 | INV. G06T5/00 |
| A | * Seite 164 - Seite 165; Abbildungen 2-4 * | 8-10 | |
| | ----- | | |
| X,D | ISAAC N BANKMAN ET AL: "Segmentation Algorithms for Detecting Microcalcifications in Mammograms", IEEE TRANSACTIONS ON INFORMATION TECHNOLOGY IN BIOMEDICINE, IEEE SERVICE CENTER, LOS ALAMITOS, CA, US, Bd. 1, Nr. 2, Juni 1997 (1997-06), XP011028275, ISSN: 1089-7771 | 1,12-15 | |
| A | * Seite 143, rechte Spalte; Abbildung 1 * | 2-11 | RECHERCHIERTE SACHGEBIETE (IPC) |
| | ----- | | G06T |
| X | WO 02/43004 A2 (ISIS INNOVATION [GB]; MULET PARADA MIGUEL [GB]; NOBLE JULIA ALISON [GB] 30. Mai 2002 (2002-05-30) | 1,12-15 | |
| A | * Zusammenfassung; Abbildung 9 * | 2-11 | |
| | ----- | | |

Der vorliegende Recherchenbericht wurde für alle Patentansprüche erstellt

| Recherchenort | Abschlußdatum der Recherche | Prüfer |
|---|---|---|
| München | 10. Oktober 2011 | Werling, Alexander |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 11 17 4162

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-10-2011

| Im Recherchenbericht angeführtes Patentdokument | Datum der Veröffentlichung | Mitglied(er) der Patentfamilie | | Datum der Veröffentlichung |
|---|---|---|---|---|
| WO 0243004 A2 | 30-05-2002 | AU | 2383102 A | 03-06-2002 |
| | | DE | 60111422 D1 | 14-07-2005 |
| | | DE | 60111422 T2 | 16-03-2006 |
| | | EP | 1350223 A2 | 08-10-2003 |
| | | US | 2004047498 A1 | 11-03-2004 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4885688 A
- US 4710876 A
- DE 10202732 A1

**In der Beschreibung aufgeführte Nicht-Patentliteratur**

- **MCCARTHY S et al.** Segmentation algorithm for objects with very low edge contrast. *PROCEEDINGS OF THE SPIE - THE INTERNATIONAL SOCIETY FOR OPTICAL ENGINEERING SPIE-INT. SOC. OPT. ENG USA,* vol. 5608 (1), ISSN 0277-786X, 162-168

- **ISAAC N BANKMAN et al.** Segmentation Algorithms for Detecting Microcalcifications in Mammograms. *IEE TRANSACTIONS ON INFORMATION TECHNOLOGY IN BIOMEDICINE,* Juni 1997, vol. 1 (2), ISSN 1089-7771
- **FELDKAMP, L.A. ; DAVIS, L. C ; KRESS, J.W.** Practical cone-beam algorithm. *J. Opt. Soc. Amer.,* 1984, vol. 1 (56), 612-619